Europäisches Patentamt

**European Patent Office**

**Office européen des brevets**

(11) Numéro de publication: **0 079 029**
**A1**

## (12) DEMANDE DE BREVET EUROPEEN

(21) Numéro de dépôt: **82110091.4**

(22) Date de dépôt: **02.11.82**

(51) Int. Cl.³: **F 16 L 37/22**
**F 16 L 37/00**

(30) Priorité: **06.11.81 FR 8120788**

(43) Date de publication de la demande:
**18.05.83 Bulletin 83/20**

(84) Etats contractants désignés:
**DE FR GB IT NL**

(71) Demandeur: **ATELIERS ET CHANTIERS DE BRETAGNE
ACB Société anonyme dite:
Prairie-au-Duc
F-44200 Nantes(FR)**

(72) Inventeur: **Roblin, Jean-Paul
7, rue Henri Jullin
F-44300 Nantes(FR)**

(72) Inventeur: **Rodriguez, Francis
4, rue de la Boissière
F-44120 Vertou(FR)**

(74) Mandataire: **Weinmiller, Jürgen et al,
Zeppelinstrasse 63
D-8000 München 80(DE)**

(54) **Dispositif de connexion pour le raccordement de conduites.**

(57) Ce dispositif comporte un connecteur mâle (1) et un connecteur femelle (4) le connecteur mâle comporte une collerette (7) et une face d'appui (16) contre une face correspondante (17) du connecteur femelle et est caractérisé en ce que le connecteur femelle comporte une partie centrale (8), une première chemise coulissante (9) entourant la partie centrale et une seconde chemise coulissante (10) entourant la première chemise, ladite première chemise étant munie d'une série radiale de doigts de blocage (29) logés dans des orifices (28) de la première chemise, la deuxième chemise (10) et les doigts (29) comportant des moyens (30, 32) coopérant entre eux de manière à ce que le coulissement de la deuxième chemise (10) provoque le déplacement radiale des doigts (29).

FIG.2

## Dispositif de connexion pour le raccordement de conduites

La présente invention concerne un dispositif de connexion destiné à effectuer des raccordements de conduites uniques ou de faisceaux de conduites par la jonction de deux extrémités associées aux conduites à raccorder.

Le dispositif comprend deux parties : un connecteur mâle qui ne comporte aucun organe de manoeuvre et un connecteur femelle qui comporte l'ensemble des organes de manoeuvre.

On peut trouver une application particulièrement intéressante du connecteur selon l'invention dans une installation modulaire de production pétrolière sous-marine où il y a des modules fonctionnels comportant des vannes de manoeuvre, modules devant être raccordés à des conduites externes. Ces modules comportent donc des moyens de connexion avec ces conduites, les conduites externes portant le connecteur mâle et le module comportant le connecteur femelle avec ses moyens de manoeuvre. Une telle installation est décrite dans la demande de brevet n° 81 03506 du 23 février 1981.

On a tout intérêt à diminuer la course permettant la connexion du connecteur femelle à l'intérieur du module où la place est limitée.

L'invention a donc pour but de réaliser un dispositif de connexion dans lequel la course du connecteur femelle est limitée, diminuant ainsi l'encombrement et peut s'appliquer dans tous les cas où un gain de place est utile.

L'idée principale de l'invention, permettant d'atteindre ce but, consiste à réaliser un connecteur femelle télescopique.

L'invention a donc pour objet un dispositif de connexion pour le raccordement de conduites, comportant un connecteur mâle associé à une première extrémité d'au moins une conduite et un connecteur femelle associé à une seconde extrémité, à raccorder à la première, d'au moins une conduite, ledit connecteur mâle comprenant une pièce cylindrique comportant une collerette servant de prise au connecteur femelle et une face d'appui contre une face correspondante du connecteur femelle, caractérisé en ce que le connecteur femelle comporte une partie cylindrique centrale, une première chemise coulissante entourant la partie cylindrique centrale et pouvant coulisser entre deux positions extrêmes

dont la plus avancée permet à ladite chemise de recouvrir et dépasser ladite collerette, une seconde chemise coulissante entourant la première chemise et pouvant coulisser entre deux positions extrêmes, ladite première chemise étant munie, au voisisnage de son extrémité avant, d'une série radiale de doigts de blocage logés dans des orifices traversant la paroi de ladite première chemise, la deuxième chemise et les doigts comportant des moyens coopérant entre eux de manière à ce que le coulissement de la chemise provoque un déplacement radial des doigts dont le sens dépend du sens du coulissement de la chemise.

Selon une réalisation particulière, lesdits moyens consistent pour chaque doigt en une queue solidaire du doigt et coopérant avec une rampe axiale de ladite seconde chemise.

L'invention sera bien comprise à la lumière de la description d'un exemple de réalisation faite ci-après en regard du dessin annexé dans lequel :

La figure 1 montre en vue éclatée un dispositif de connexion selon l'invention.

Les figures 2A à 2D montrent dans ses différentes phases, le fonctionnement du dispositif au cours de la fermeture.

Les figures 3A et 3B montrent le dispositif dans ses phases d'ouverture.

La figure 4 est une demie vue agrandie en coupe selon IV-IV de la figure 2D.

Dans l'exemple décrit, le dispositif de connexion permet de connecter et de déconnecter les extrémités de deux conduites fixes non représentées aboutissant à un connecteur mâle fixe 1 constitué d'une pièce cylindrique, raccordée aux conduites par une bride non représentée, et comportant des orifices 2 et 3 prolongeant les conduites, d'un connecteur femelle 4 auquel aboutissent deux conduites 5 et 6 reliées à des organes quelconques. Les conduites 5 et 6, par hypothèse, peuvent subir un léger déplacement axial.

Le connecteur mâle 1 est donc constitué d'une pièce cylindrique comportant une collerette 7 permettant l'accrochage des organes mobiles du connecteur femelle 4.

Le connecteur femelle 4 comprend essentiellement trois parties :

une partie centrale cylindrique 8, une première chemise coulissante 9 disposée autour de la partie centrale et une seconde chemise coulissante 10 disposée autour de la première chemise coulissante. Les conduites 5 et 6 sont reliées à la partie centrale 8 par une bride 11 fixée à la partie centrale par des vis ou goujons non représentés. Cette partie centrale comporte deux orifices 12 et 13 permettant de prolonger et de faire communiquer les conduites 5 et 6 avec les orifices 2 et 3 du connecteur mâle 1. Afin de placer dans la bonne position angulaire la pièce centrale 8 lorsque le dispositif de connexion est fermé, la pièce centrale comporte deux ergots d'indexation tels que 14 qui viennent se loger dans deux trous correspondants tel que 15 du connecteur mâle.

Le connecteur mâle 1 comprend une face d'appui 16 contre une face correspondante 17 de la partie centrale 8 du connecteur femelle 4. Des joints biconiques 18 et 19 sont placés dans des logements coniques 20 et 21 de la partie centrale 8 et du connecteur mâle 1 et assurent l'étanchéité. De même, des joints biconiques 22 et 23 sont interposés entre la bride 11 et la partie centrale 8 dans des logements coniques 24, 25 de la bride 11 et 26, 27 de la partie centrale 8.

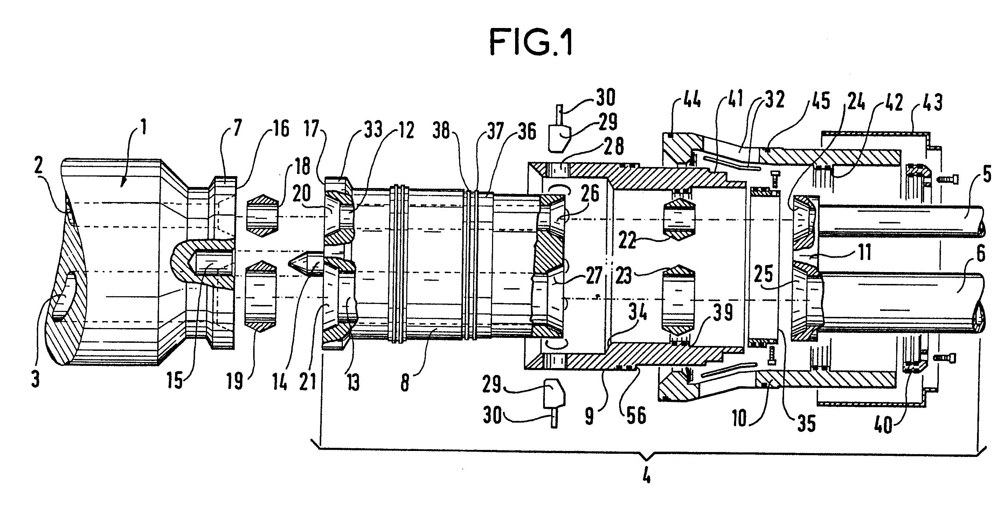

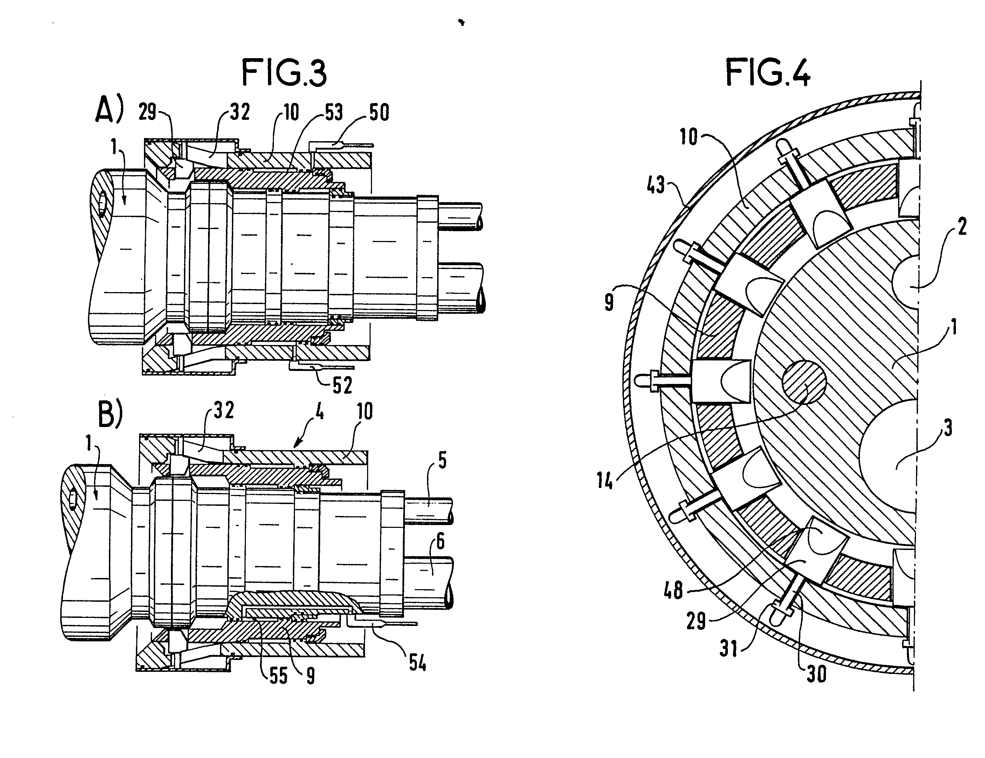

La première chemise coulissante 9 porte une série d'orifices radiaux tels que 28 dans lesquels peuvent coulisser radialement des doigts de blocage 29. Les doigts de blocage 29 possèdent chacun une queue 30 comportant à sa partie supérieure un élargissement 31 visible sur une seule face, perpendiculaire aux figures 1, 2 et 3, comme on le voit sur la figure 4. La seconde chemise coulissante 10 possède une série radiale de lumières axiales allongées 32. Chaque queue 30 passe au travers de ces lumières qui servent de rampes pour le déplacement radial des doigts de blocage 29.

La partie centrale 8 porte une collerette 33 servant de butée axiale à la première chemise 9 dans son déplacement vers la gauche, la chemise 9 comportant une partie correspondante d'appui 34. Le déplacement vers la droite est limitée par une bague 35 fixée sur la partie centrale 8, sur une portée 36 portant des joints 37 et 38. Cette bague coopère avec un épaulement 39 de la première chemise 9. De même, le déplacement vers la droite de la seconde chemise 10 est limité par une bague 40 fixée sur la première chemise 9 sur une portée 41 et coopérant avec une portée interne 42 de la seconde chemise 10, et le déplacement vers la gauche est limité par l'appui de la portée 42 sur un épaulement 56 de la première chemise 9.

Un capot 43 est disposé autour de la seconde chemise 10 au niveau des lumières 32. Ce capot protège le mécanisme, et il est fixé d'une manière étanche grâce à des joints 44 et 45.

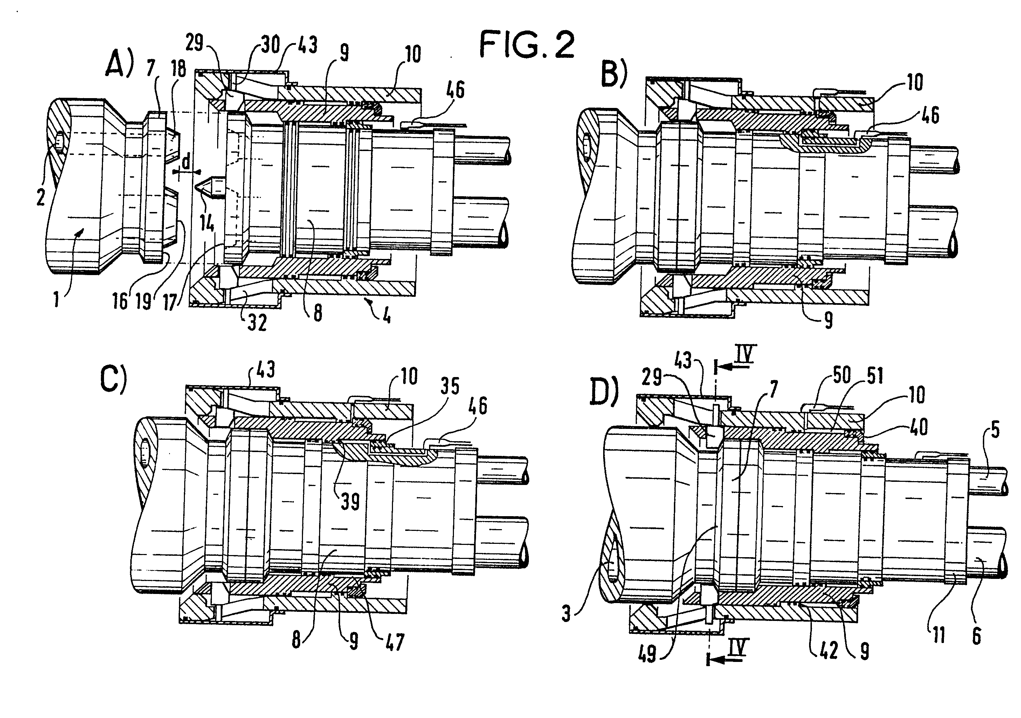

Le fonctionnement du dispositif va maintenant être décrit en référence à la figure 2.

Au départ, lorsque le dispositif de connexion est ouvert, on est dans la position de la figure 2A, les première et deuxième chemises 9 et 10 sont rétractées vers la droite.

Un moyen externe agit alors pour avancer l'ensemble du connecteur femelle 4 (ou le connecteur mâle 1) de manière à ce que les faces 16 et 17 du connecteur mâle et de la pièce centrale 8 du connecteur femelle viennent en contact, on est alors dans la position de la figure 2B. On déplace ensuite vers la gauche la première chemise 9 de manière à se trouver dans la position de la figure 2C. Pour ce faire, on envoie temporairement de l'huile sous pression dans une canalisation 46 aboutissant dans une chambre annulaire 47 entre la bague 35 et l'épaulement 39.

Enfin, pour bloquer en position fermée le dispositif de connexion, on déplace la seconde chemise coulissante 10 vers la gauche ce qui a pour effet d'abaisser les doigts de blocage 29 qui viennent prendre appui par une face biseautée 48 contre le rebord conique 49 de la collerette 7. Pour opérer ce déplacement, on envoie temporairement de l'huile sous pression dans une conduite 50 aboutissant dans une chambre annulaire 51 entre la portée 42 et la bague 40.

On voit qu'on gagne, en encombrement du connecteur femelle, la course de la première chemise 9. En effet dans la figure 2C, on est ramenée à un connecteur connu si la première chemise 9 et la pièce centrale 8, dans la position de cette figure constituent une seule et même pièce et l'on voit alors qu'il est nécessaire de reculer davantage l'ensemble du connecteur femelle si l'on souhaite qu'en position ouverte de la connexion il existe, comme sur la figure 2A, une certaine distance d entre les parties extrêmes du connecteur mâle et du connecteur femelle. Or ceci est nécessaire dans certaines applications et notamment celles pour lesquelles, le connecteur mâle étant fixé, on amène un équipement contenant le connecteur femelle cet équipement arrivant perpendiculairement à l'axe du connecteur mâle.

C'est le cas par exemple dans la demande de brevet citée ci-dessus. Ce connecteur télescopique permet alors de réduire la course du connecteur femelle à l'intérieur d'une enveloppe qui peut être réduite.

Pour défaire la connexion, on procéde en sens inverse, on recule la seconde chemise coulissante en envoyant temporairement de l'huile sous pression dans une conduite 52 aboutissant à une chambre annulaire 53, on est alors dans la position de la figure 3A. Dans ce mouvement, les doigts 29 remontent en suivant la pente des lumières 32. On recule ensuite la première chemise 9 en envoyant de l'huile sous pression dans une conduite 54 aboutissant dans une chambre annulaire 55. Il ne reste plus qu'à reculer l'ensemble du connecteur femelle 4 ou le connecteur mâle 1.

Il est à noter que la pression de l'huile n'est appliquée que pour effectuer les mouvements des chemises. En situation stable (figures 2A, 2D) aucune pression d'huile est appliquée.

Bien sur, l'invention n'est pas limitée à l'exemple de réalisation décrit ci-dessus. On peut aussi remplacer l'action oléo-hydraulique par une action mécanique ou même manuelle des chemises.

En outre, la partie centrale 8 du connecteur femelle 4 peut venir d'une seule pièce avec la bride 11.

REVENDICATIONS

1/ Dispositif de connexion pour le raccordement de conduites, comportant un connecteur mâle (1) associé à une première extrémité d'au moins une conduite et un connecteur femelle (4) associé à une seconde extrémité, à raccorder à la première, d'au moins une conduite, ledit connecteur mâle comprenant une pièce cylindrique comportant une collerette (7) servant de prise au connecteur femelle et une face d'appui (16) contre une face correspondante (17) du connecteur femelle, caractérisé en ce que le connecteur femelle comporte une partie cylindrique centrale (8), une première chemise coulissante (9) entourant la partie cylindrique centrale et pouvant coulisser entre deux positions extrêmes, dont la plus avancée permet à ladite chemise de recouvrir et dépasser ladite collerette, une seconde chemise coulissante (10) entourant la première chemise et pouvant coulisser entre deux positions extrêmes, ladite première chemise étant munie, au voisinage de son extrémité avant, d'une série radiale de doigts de blocage (29) logés dans des orifices (28) traversant la paroi de ladite première chemise, la deuxième chemise et les doigts comportant des moyens coopérant entre eux de manière à ce que le coulissement de la deuxième chemise provoque un déplacement radial des doigts dont le sens dépend du sens du coulissement de la chemise.

2/ Dispositif de connexion selon la revendication 1, caractérisé en ce que lesdits moyens consistent pour chaque doigt en une queue (30) solidaire du doigt et coopérant avec une rampe axiale (32) de ladite seconde chemise.

FIG.1

FIG. 2

A)

B)

C)

D)

2/3

0079029

# FIG.3

A)

B)

# FIG.4

3/3

0079029

Office européen
des brevets

**RAPPORT DE RECHERCHE EUROPEENNE**

0079029

Numéro de la demande

EP 82 11 0091

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | F 16 L 37/22 |
| Y | DE-A-1 919 899 (TECHNO-CHEMIE) *Figures 1-3* | 1 | F 16 L 37/00 |
| | --- | | |
| Y | FR-A-2 120 448 (BENNES MARREL) *Figures 1-4* | 1 | |
| | --- | | |
| A | US-A-4 216 982 (CHOW) | 1,2 | |
| | --- | | |
| A | GB-A-2 004 341 (NL/INDUSTRIES) | 1 | |
| | --- | | |
| A | FR-A-2 323 088 (CAMERON IRON WORKS) | 1 | |
| | ----- | | |

**DOMAINES TECHNIQUES RECHERCHES (Int. Cl. 3)**

F 16 L

Le présent rapport de recherche a été établi pour toutes les revendications

| Lieu de la recherche | Date d'achèvement de la recherche | Examinateur |
|---|---|---|
| LA HAYE | 31-01-1983 | ANGIUS P. |